# EUROPEAN PATENT SPECIFICATION

(11) **EP 3 714 995 B1**
(45) Date of publication and mention of the grant of the patent: **11.09.2024**
(21) Application number: 20165491.0
(22) Date of filing: 25.03.2020
(51) Int. Cl.: B05D 7/14, B05D 3/10, B05D 3/12, B05D 1/28, B05D 3/02, C09G 1/02, C23C 18/04, C23C 18/12, B05D 7/00, B05C 1/08, B05C 9/10, B05C 9/14

(54) **STEEL SHEET COATING APPARATUS AND STEEL SHEET COATING METHOD USING THE APPARATUS**
VORRICHTUNG ZUM BESCHICHTEN VON STAHLBLECH UND VERFAHREN ZUM BESCHICHTEN VON STAHLBLECH MIT DIESER VORRICHTUNG
APPAREIL DE REVÊTEMENT DE TÔLE D'ACIER ET PROCÉDÉ DE REVÊTEMENT DE TÔLE D'ACIER UTILISANT L'APPAREIL

(30) Priority: 26.03.2019 KR 20190034530
(43) Date of publication of application: 30.09.2020
(73) Proprietor: LG Electronics Inc., 07336 SEOUL (KR)
(72) Inventor: KIM, Dong Jin, 08592 Seoul (KR); JUN, Hyunwoo, 08592 Seoul (KR); KIM, Juwon, 08592 Seoul (KR); HWANG, Jongwon, 08592 Seoul (KR)
(74) Representative: Vossius & Partner Patentanwälte Rechtsanwälte mbB

(56) References cited:
- WO-A1-2018/013863
- WO-A2-02/18065
- DE-U1- 212010 000 102
- US-A- 2 809 901
- US-A1- 2011 291 429
- SHINJIRO MURAKAMI ET AL: "KAWASAKI STEEL'S MULTIPURPOSE COATING LINE", AISE STEEL TECHNOLOGY, AISE, PITTSBURG, PA, US, vol. 70, no. 7, 1 July 1993 (1993-07-01), pages 36 - 41, XP000396800, ISSN: 0021-1559

## Description

### TECHNICAL FIELD

The present disclosure relates to a steel sheet coating apparatus and a steel sheet coating method using the apparatus.

### BACKGROUND

A steel sheet may be coated with a coated layer for various purposes. For example, the coating may include a color coating layer or other functional coating layers.

Methods for coating the steel sheet with the coated layer may include a spray coating, a dip coating, and a roll coating.

For example, in the spray coating method, a coated layer may be formed on an object using one or more spray guns that spray a coating paint on the object in a pneumatic pressure or similar manner.

In the dip coating method, an object may be placed in a container containing a coating paint therein, and taken out of the container after a predetermined time to form a coated layer on the object.

In some cases, in the spray coating method and the dip coating method, it may be difficult to apply the coating paint on the object with a uniform thickness of the coated layer. That is, it may be difficult to maintain thickness uniformity of the coated layer. Thus, the spray coating scheme and the dip coating scheme may not be applied to mass production.

In the roll coating method, a coating paint may be applied on a roller and then a steel sheet may pass along a rotating roller such that a coating paint is transferred to the steel sheet, and thus a coated layer is formed on a surface of the steel sheet.

In the roll coating method, the thickness of the coated layer may be uniform. Thus, the roll coating scheme may be advantageous for maintaining the thickness uniformity of the coated layer.

In some cases, a roll coating scheme may be performed at a low temperature lower than or equal to 250 °C. In order to maintain properties of the coated layer and to achieve adhesion between the steel sheet and the coating paint, the coated layer may have two or more layers.

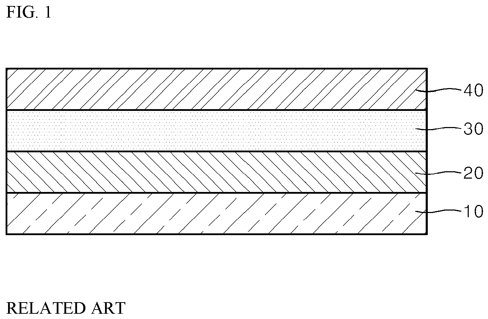

FIG. 1 illustrates a steel sheet having a coated layer formed thereon using a coating scheme in related art. The coated steel sheet may include a steel sheet 10, a pretreatment layer 20, a primer layer 30, and a top coated layer 40.

For instance, the pretreatment layer 20 may be formed by pretreating a surface of the steel sheet in order to secure interlayer adhesion between the steel sheet 10 and the primer layer 30 and corrosion resistance. The primer layer 30 may be formed to improve interlayer bonding force between the surface of the steel sheet 10 and the top coated layer 40.

In some cases, the primer layer 30 may have a thickness of about 5 µm, and the top coated layer 40 may have a thickness of 15 to 20 µm. Thus, the coated layer on the steel sheet 10 may have a total thickness of at least 20 µm.

The steel sheet, which has the coated layer including multi-layers formed thereon, may not have a thin coated layer. In some examples, where the coated layer includes multiple layers, a material cost may increase due to an amount of materials applied on the steel sheet.

In some cases, where the steel sheet includes the coated layer including multiple layers, characteristics of the steel sheet, such as an appearance of the steel sheet or an inherent gloss of the steel sheet, may not be exposed to an outside.

In some cases, where the roll coating scheme is performed at a low temperature of 250 °C or lower, the roll coating scheme may not be suitable for a coating apparatus and a coating method using a high heat-resistant coating liquid.

US 2 809 901 A discloses a method for protectively coating metals and to the composite article resulting from the method.

### SUMMARY

The present disclosure describes a steel sheet coating apparatus capable of controlling a thickness of a coated layer such that a thin film coated layer including a singlelayer may be formed on the steel sheet, and also describes a steel sheet coating method using the apparatus.

The present disclosure further describes a steel sheet coating apparatus that can enhance adhesion between a steel sheet and a coated layer, and describes a steel sheet coating method using the apparatus.

The present disclosure also describes a steel sheet coating apparatus using a high temperature curing scheme suitable for coating of a high heat-resistant coating liquid, and describes a steel sheet coating method using the apparatus.

Purposes of the present disclosure are not limited to the above-mentioned purpose. Other purposes and advantages of the present disclosure as not mentioned above may be understood from following descriptions and more clearly understood from implementations of the present disclosure. Further, it will be readily appreciated that the purposes and advantages of the present disclosure may be realized by features and combinations thereof as disclosed in the claims.

According to one aspect of the subject matter described in this application, a steel sheet coating apparatus includes a cleaner configured to apply cleaning liquid to thereby clean a surface of a steel sheet, a polisher that applies polishing liquid to the cleaned surface of the steel sheet and that includes at least one polishing wheel configured to polish the surface of the steel sheet, a coater that includes a plurality of coating rollers that are configured to coat the polished surface of the steel sheet with coating liquid, and a curing furnace that includes curing chambers that are configured to heat the steel sheet coated with the coating liquid, that have different heating temperatures, and that are configured to cure the coating liquid on the steel sheet based on heating the steel sheet in one chamber having a first temperature and then heating the steel sheet in another chamber having a second temperature greater than the first temperature.

Implementations according to this aspect may include one or more of the following features. For example, the polishing liquid may include water, 1 to 10% by weight of nitric acid, and 0.1 to 5% by weight of alumina having a mesh size between 1000 and 3000 mesh. In some examples, the at least one polishing wheel may include a sponge or a polishing whetstone. In some examples, the coating liquid may include silicate.

In some implementations, each of the plurality of coating rollers of the coater may be spaced apart from the steel sheet by a distance in a range of 0.1 to 1.0 mm.

The plurality of curing chambers includes a first curing chamber having a first heating temperature in a range of 0 to 150 °C, a second curing chamber having a second heating temperature in a range of 150 to 250 °C, and a third curing chamber having a third heating temperature in a range of 300 to 500 °C. The curing furnace is configured to receive the steel sheet at the first curing chamber, transfer the steel sheet from the first curing chamber to the second curing chamber, and transfer the steel sheet from the second curing chamber to the third curing chamber. The curing furnace may further include one or more curing chambers that are arranged after the third curing chamber and that have heating temperatures in a range of 300 to 500 °C.

The plurality of coating rollers include a first coating roller and a first control roller that are disposed at a first side of the steel sheet and that contact each other. The first control roller may be configured to adjust an amount of the coating liquid applied to the steel sheet based on changing a rotating direction or a rotating speed. A first spacing from the steel sheet to the first coating roller is less than a second spacing from the steel sheet to the first control roller. In some examples, the coater is configured to receive the coating liquid at a position between the first coating roller and the first control roller in a state in which the first coating roller and the first control roller rotate.

A diameter of the first coating roller is greater than a diameter of the first control roller, and an outer circumferential surface of the first coating roller is configured to contact a layer of the coating liquid attached to the steel sheet, and the first control roller is spaced apart from the layer of the coating liquid.

According to another aspect, a steel sheet coating method includes cleaning a surface of a steel sheet using cleaning liquid, applying polishing liquid to the cleaned surface of the steel sheet, and polishing the surface of the steel sheet using at least one polishing wheel, coating the polished surface of the steel sheet with coating liquid using a plurality of coating rollers, and transferring the coated steel sheet through a plurality of curing chambers that are arranged to increase a heating temperature from one chamber to another chamber to thereby cure the coating liquid on the steel sheet.

Implementations according to this aspect may include one or more of the following features. For example, the polishing liquid may water, 1 to 10% by weight of nitric acid, and 0.1 to 5% by weight of alumina having a mesh size between 1000 and 3000 mesh. In some examples, the polishing wheel may include a sponge or a polishing whetstone. In some examples, the coating liquid may include silicate.

In some implementations, coating the polished surface of the steel sheet may include moving the steel sheet at a conveying velocity in a range of 0.1 to 1m/min. In some examples, coating the polished surface of the steel sheet may be performed based on maintaining a spacing in a range of 0.1 to 1.0 mm between the steel sheet and each of the plurality of coating rollers.

In some implementations, transferring the coated steel sheet is performed through at least three curing chambers including a first curing chamber having a first heating temperature in a range of 0 to 150 °C, a second curing chamber having a second heating temperature in a range of 150 to 250 °C, and a third curing chamber having a third heating temperature in a range of 300 to 500 °C. For example, transferring the coated steel sheet may include receiving the steel sheet at the first curing chamber, transferring the steel sheet from the first curing chamber to the second curing chamber, transferring the steel sheet from the second curing chamber to the third curing chamber, and transferring the steel sheet from the third curing chamber to one or more curing chambers that are arranged after the third curing chamber and that have heating temperatures in a range of 300 to 500 °C.

Coating the polished surface of the steel sheet includes placing the steel sheet to a first position that faces a first coating roller and a first control roller among the plurality of coating rollers, supplying the coating liquid between the first coating roller and the first control roller based on rotating the first coating roller and the first control roller to thereby attach a first coating layer of the coating liquid, and adjusting an amount of the coating liquid based on changing a rotating direction or a rotating speed of the first control roller. A first spacing from the steel sheet to the first coating roller may be less than a second spacing from the steel sheet to the first control roller.

Coating the polished surface of the steel sheet further includes transferring the steel sheet from the first position to a second position that faces a second coating roller and a second control roller among the plurality of coating rollers, supplying the coating liquid between the second coating roller and the second control roller based on rotating the second coating roller and the second control roller to thereby attach a second coating layer of the coating liquid on the first coating layer, and adjusting an amount of the coating liquid based on changing a rotating direction or a rotating speed of the second control roller.

In some implementations, the surface of the steel sheet may be cleaned with the cleaning liquid and then the polishing liquid is applied to the cleaned surface. Then, the steel sheet surface may be modified by performing mechanical polishing to polish the surface using the polishing wheel. This may allow the steel sheet having enhanced adhesion with the coated layer composed of a single layer.

In some implementations, the coating liquid may be continuously applied on the sheet surface using the plurality of coating rollers. This may allow the steel sheet having a thin coated layer composed of a single layer whose thickness may be easily controlled to a desired coating thickness.

In some implementations, the steel sheet having the high heat-resistant coated layer formed thereon may pass through the curing furnace including the plurality of curing chambers whose temperatures may be raised up in a step by step manner to a high temperature, thereby to cure the high heat-resistant coated layer in a step by step manner. Thus, the coated surface may be stabilized at the high temperature.

Effects of the present disclosure may be as follows but may not be limited thereto.

In some implementations, the coated layer composed of a single layer may be formed on the steel sheet. Thus, appearance characteristics of a surface of the steel sheet such as gloss inherent to the steel sheet, a hairline formed via machining, and diffused reflection may be exposed to an outside.

In some implementations, the surface of the steel sheet is cleaned and then is subjected to mechanical polishing to remove residue from the surface of the steel sheet. This may modify the surface of the steel sheet and improve wetting of the coated layer, thereby to enhance the adhesion between the steel sheet and the coated layer.

In some implementations, when hardening the coated layer of the steel sheet, temperature increase may be performed in a step-by-step manner. This may suppress occurrence of boiling phenomenon of a coated surface which may otherwise occur in a rapid high temperature heating scheme, thereby to stabilize the coated surface.

In addition to the effects as described above, specific effects of the present disclosure will be described together with the detailed description for carrying out the disclosure.

### BRIEF DESCRIPTION OF DRAWINGS

FIG. 1 illustrates a steel sheet having a coated layer including multi-layers in related art.
FIG. 2 is a schematic process flowchart showing an example of a steel sheet coating method according to the present disclosure.
FIG. 3 illustrates an example of a steel sheet having an example protective film attached thereto.
FIG. 4 illustrates an example of polishing of a steel sheet without a protective film using an example polishing wheel.
FIG. 5 illustrates an example of continuous coating of a steel sheet to coat a coated layer using a plurality of rollers.

### DETAILED DESCRIPTIONS

The same reference numbers in different figures denote the same or similar elements, and as such perform similar functionality. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various implementations are illustrated and described further below. It will be understood that the description herein is not intended to limit the claims to the specific implementations described. It is intended to cover alternatives, modifications, and equivalents as may be included within the spirit and scope of the present disclosure as defined by the appended claims.

Hereinafter, a steel sheet coating apparatus and a steel sheet coating method using the steel sheet coating apparatus will be described.

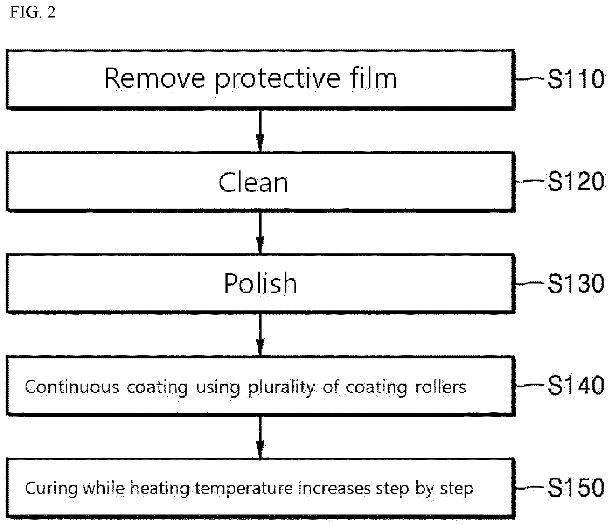

As shown in the process flow chart of FIG. 2, a steel sheet coating method includes: a step S110 of removing a protective film from a steel sheet, a step S120 of cleaning a surface of the steel sheet from which the protective film has been removed, using a cleaning liquid; a step S130 of applying a polishing liquid to the cleaned surface of the steel sheet and polishing the surface of the steel sheet with at least one polishing wheel; a step S140 of continuously coating the coating liquid on the polished surface of the steel sheet using a plurality of coating rollers; and a step S150 of curing the coating liquid while passing the steel sheet through a plurality of curing chambers heating the sheet, wherein the curing includes increases a heating temperature in a step by step manner.

In some implementations, the method may further include additional processes such as drying and rinsing between the steps described above.

In some examples, the steps S110 to S150 may be performed by one or more controllers. For example, the controller may include a microprocessor, a computer, or an electric circuit. In some implementations, each step may be controlled by a separate controller. For example, the S120 may be controlled by a cleaner controller, the step S130 may be controlled by a wheel controller, the step 140 may be controlled by a roller controller, and the step 150 may be controlled by one or more temperature controllers. In some cases, the steps S 110 to S 150 may be performed by one controller.

In order to form a coated steel sheet, a steel sheet is first prepared.

In some cases, before the prepared steel sheet is transferred to a process line for forming a coated layer, a protective film may be attached to a surface of the steel sheet in order to minimize surface scratches that may otherwise occur during a moving process thereof.

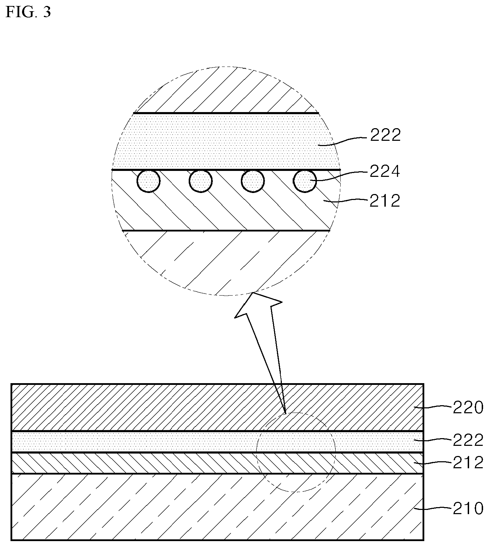

As illustrated in FIG. 3, on the surface of the steel sheet 210, a passive film 212 made of a stable oxide, etc. is formed to enhance corrosion resistance of the steel sheet. A protective film 220 having an adhesive liquid 222 applied on one surface thereof may be attached to the passive film 212 of the steel sheet 210.

The protective film 220 attached to the steel sheet should be removed from the steel sheet transferred to the process line for coating before the sheet is subjected to a process of forming the coated layer.

The adhesive liquid 222 may be in direct contact with the passive film 212 of the steel sheet 210. Thus, a portion of the adhesive liquid 222 may be transferred to the passive film 212, resulting in an adhesive liquid residue 224 in the passive film 212.

Therefore, even when the adhesive liquid 222 is removed when the protective film 220 is removed from the steel sheet 210, the adhesive liquid residue 224 transferred to the passive film 212 may not be removed but may remain on the surface of the steel sheet 210.

Wettability between the coated layer to be formed later and the steel sheet surface may be degraded due to the adhesive liquid residue 224 remaining on the surface of the steel sheet 210.

Degradation of the wettability between the coated layer and the steel sheet surface reduces the adhesion of the coated layer with the surface of the steel sheet. Accordingly, it is desirable to remove the adhesive liquid residue as much as possible to minimize the degradation of the wettability between the coated layer and the steel sheet surface.

In some examples, it may be difficult to remove the adhesive liquid residue 224 transferred to the passive film 212 using a simple cleaning operation.

Therefore, the method includes first cleaning the surface of the steel sheet 210 from which the protective film 220 has been removed, using the cleaning liquid and a cleaning device or a cleaner. For example, the cleaner may include a liquid dispenser having one or more holes configured to output the cleaning liquid. In some cases, the cleaner may include one or more sprayer configured to output the cleaning liquid. In some cases, the cleaner may include a reservoir configured to accommodate the cleaning liquid, and a pipe or a tube that may carry the cleaning liquid. In some cases, the cleaner may include a liquid bath configured to accommodate the cleaning liquid, and the steel sheet may be dipped into the liquid bath or pass through the liquid bath.

Then, the method includes applying the polishing liquid to the cleaned surface of the steel sheet using a polisher, and polishing the surface of the steel sheet with at least one polishing wheel, such that the residue of the adhesive liquid may be removed as much as possible.

A type of the cleaning liquid used to clean the surface of the steel sheet is not particularly limited.

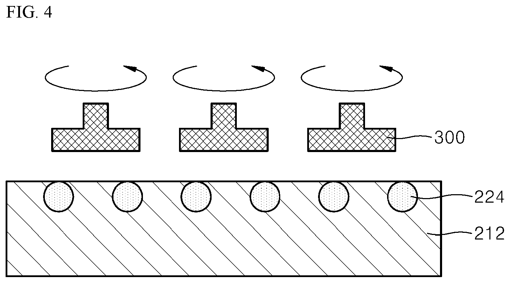

The polishing liquid is applied to the surface of the steel sheet as cleaned with the cleaning liquid. As illustrated in FIG. 4, at least one polishing wheel 300 is used to polish the surface of the steel sheet.

The polishing liquid used to polish the surface of the steel sheet contains 1 to 10% by weight of nitric acid, 0.1 to 5% by weight of alumina with a size of 1000 to 3000 mesh, and the remainder including water.

When a content of the nitric acid is smaller than 1% by weight, it is difficult to remove contaminants and oil on a material surface. When the content thereof exceeds 10% by weight, corrosion of the material surface may occur and the polishing wheel may melt.

Further, when a content of the alumina is smaller than 0.1% by weight, the polishing force is insufficient to remove impurities on the surface. When the content exceeds 5% by weight, the polishing force is improved, but there is a disadvantage that a surface gloss of a raw material may be increased before coating.

In related art, when cleaning the surface of the steel sheet, a weak alkali or weak acid cleaning liquid is sprayed onto the surface of the steel sheet at a high pressure to remove the impurities therefrom. When the steel sheet has the protective film attached thereto, it may not be easy to remove a strongly attached adhesive component of the protective film from the sheet using a conventional cleaning and polishing scheme because the adhesive component of the protective film lowers the wettability of the coating.

Therefore, when using the polishing liquid containing the mixture of the nitric acid and alumina, removing the adhesive component and impurities adhering to the steel sheet surface may be performed effectively.

In some examples, the polishing wheel 300 may include a sponge or a polishing whetstone.

Polishing the surface of the steel sheet using the polishing wheel 300 to achieve mechanical polishing such as the sponge or the polishing whetstone may allow removal of the remaining adhesive liquid residue 224 transferred to the passive film 212 as much as possible.

In other words, the method includes the first chemical cleaning with the cleaning liquid, and then applying the polishing liquid, and then the second mechanical polishing, that is, the mechanical cleaning using the polishing wheel. Thus, the adhesive liquid residue formed on the steel sheet may be removed as much as possible

Thus, the method has an improved effect of removing the adhesive liquid residue, compared to a case where only the chemical cleaning step is performed with the cleaning liquid or only to a case where only the mechanical cleaning is performed without the chemical cleaning with the cleaning liquid.

Thus, removing the residue on the steel sheet surface as much as possible by performing both of the chemical cleaning and the mechanical cleaning may allow modification of the steel sheet surface and achievement of the improved wettability between the coated layer and the steel sheet surface to enhance the adhesion between the steel sheet surface and the coated layer.

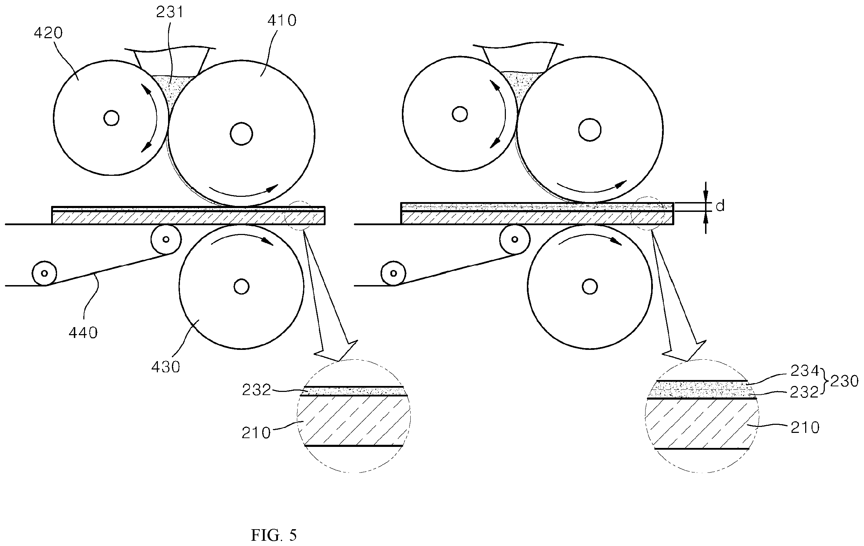

In order to form the coated layer on the polished surface of the steel sheet as described above, the steel sheet is transferred to a coater including a plurality of coating rollers as illustrated in FIG. 5. In some examples, the coating rollers may include a rotating axis and a cylindrical object configured to rotate about the rotating axis.

In some implementations, the polished steel sheet may be transferred to the coater using a conveying roller 440.

The steel sheet transferred to the coater is transferred to and passes by a coating roller 410 using a progress roller 430. At this time, the coating liquid is transferred from the coating roller 410 to the steel sheet while the sheet is passing through between the progress roller 430 and the coating roller 410. In this way, a coated layer 230 may be formed on the surface of the sheet.

In this case, the coater may include a coating amount control roller 420 to control the coating amount of the coating liquid together with the coating roller 410. The control roller 420 may rotate in a first direction to increase the amount of coating liquid supplied to the steel sheet and rotate in a second direction to decrease the amount of coating liquid supplied to the steel sheet. For instance, the first direction may be opposite to the rotating direction of the first coating roller 410, and the second direction may be the same as the rotating direction of the first coating roller 410. In some cases, the second direction may be opposite to the rotating direction of the first coating roller 410, and the first direction may be the same as the rotating direction of the first coating roller 410. In some examples, the control roller 420 may control the amount of the coating liquid by changing the rotating speed.

The coating liquid may include silicate-based high heat-resistant coating liquid.

In one example, the coating liquid may contain 20 to 40% by weight of sodium silicate having good coating properties and corrosion resistance, 10 to 30% by weight of lithium silicate having good heat resistance and compatibility, 2% by weight or less of sodium tetraborate to improve moisture resistance, and the remainder, that is, a distilled water to facilitate workability and thickness control of the coating film in the coating process.

The coating liquid has a high heat resistance at 400 °C or higher, unlike a conventional general organic coating liquid used for metal. In addition, easy clean performance may be imparted to the coating liquid to easily remove contaminants.

When the coating liquid is coated on the steel sheet, a spray coating scheme may be used. However, the present disclosure is not limited thereto. A roll coating scheme may be employed.

When using the spray coating scheme, fine particles of the sprayed coating liquid react with CO₂ in the air and are brought into a cloudy crystalline state such as fog, and then move around in the air. This may cause a defect in operation.

Therefore, the coating liquid may be coated on the sheet using the roll coating scheme. Thus, a coating process may be performed more stably.

A viscosity of the silicate-based high heat-resistant coating liquid has a low viscosity (20 °C, 1 to 1.5) similar to a viscosity of water (20 °C, 1). This is advantageous in forming the coated layer in a thin film form.

However, when using the coating liquid having the low viscosity similar to that of water, and when the coating liquid is transferred to the steel sheet using a single roller, there may be inconveniences in the work in that an operator should repeatedly perform the coating liquid several times.

In some examples, a plurality of coating rollers 410 are continuously arranged to continuously coat the coating liquid on the surface of the steel sheet.

In some implementations, one set of two coating rollers are used, but the present disclosure is not limited thereto.

As illustrated in FIG. 5, a first coated layer 232 may be formed on the steel sheet 210 as the sheet passes by a first coating roller. For example, coating liquid 231 may be applied between the first coating roller 410 and the control roller 420 to form the first coated layer 232.

After the first coating is performed, a second coated layer 234 is additionally formed on the first coated layer 232 on the steel sheet 210 as the sheet passes by a second coating roller. For example, the second roller may be located laterally next to the first roller 410.

In some implementations, where the coating liquid used to form the first coated layer 232 and the coating liquid used to form the second coated layer 234 are the same, the first coated layer 232 and the second coated layer 234 may not be physically separated from each other.

For example, when the coating liquid having a low viscosity is used, the coated layer may be repeatedly formed in order to form the coated layer having a minimum thickness to secure the physical properties of the coated layer.

In some implementations, the first coating layer 232 and the second coated layer 234 are formed as the two coating steps are continuously performed. However, the first coating layer 232 and the second coated layer 234 may not be physically separated layers but are finally formed into a single layer based coated layer 230. In some cases, the first coating layer 232 and the second coated layer 234 may be formed in one coating step that is continuously performed until a target thickness is achieved.

The steel sheet passing through the coater is subjected to a thermal curing process at a next step. A final thickness of the coated layer may be reduced via volatilization of liquid components present in the coated layer as the curing process proceeds.

Therefore, to order to achieve the final thickness of the coated layer of 1 µm or smaller and, at the same time, in order to have the thickness thereof to secure the physical properties of the coated layer, the coated layer of the steel sheet passing through the coater, for example, has a thickness of 5 µm or greater. In some examples, the coated layer may be about 5 µm.

In some implementations, the coated layer composed of a single layer is formed on the steel sheet, the appearance characteristics of the steel sheet surface such as gloss inherent to the steel sheet, hairline formed via machining, and diffused reflection may be exposed to an outside.

A distance "d" between the steel sheet 210 and each of the coating rollers 410 may be in a range of 0.1 to 1mm.

To adjust the distance between the steel sheet 210 and each of the coating rollers 410, a distance controller may be additionally installed.

When the distance between the steel sheet 210 and the coating roller 410 is smaller than 0.1mm, the steel sheet 210 and the coating roller 410 is too close to each other, so that the coating may not be performed well as the steel sheet 210 passes by the coating roller 410.

When the distance between the steel sheet 210 and the coating roller 410 exceeds 1mm, the liquid contacts an upstream portion of the sheet but flows downwardly from a downstream portion thereof because the coating liquid has a low viscosity as in water. Thus, it is difficult to form the coated layer on the steel sheet reliably.

Further, in the step of continuously coating the coating liquid on the surface of the steel sheet 210 using the plurality of coating rollers 410, a conveying velocity of the steel sheet passing by the coating rollers 410 may be in a range of 0.1 to 1m/min.

The feed velocity of the steel sheet passing by the coating rollers is lower than 0.1m/min, a thickness of the coating liquid may be larger because the velocity at which the steel sheet is conveyed is too slow compared to the velocity at which the coating liquid flows down. When the conveying velocity is greater than 1m/min, the thickness of the coating liquid is too small such that requirements for hardness, yellowing, cleaning properties and the like may not be satisfied.

After the coated layer of the coating liquid is formed on the surface of the steel sheet as described above, the curing of the coated layer proceeds.

Specifically, the coated steel sheet is transferred to a curing furnace having a plurality of curing chambers that heat the steel sheet.

As the coated steel sheet passes through the curing furnace, the heating temperature of the curing furnace is increased in a step by step manner. In the curing furnace, the curing temperature may be raised in a range of 0 to 500 °C in a step by step manner.

In some examples, where the heating temperature of the curing furnace is raised in a step by step manner, the curing chambers may be sequentially arranged in a direction in which the coated steel sheet moves, and the temperatures of the curing chambers may increase in a step by step manner along the direction.

For example, first to last chambers are sequentially arranged along the direction in which the coated steel sheet is transferred. The temperatures of the first to last chambers increase in a step by step manner.

Alternatively, first to last chambers are sequentially arranged along the direction in which the coated steel sheet is transferred. The temperatures of the first to (n)-th chambers increase in a step by step manner and then the temperatures of (n+1)-th to last curing chambers are constant.

In other words, the heating temperatures of the first to last curing chambers may continue to rise up in a step by step. Alternatively, the temperatures of the first to (n)-th chambers increase in a step by step manner and then the temperatures of the (n+1)-th to last curing chambers are constant.

In one example, the curing furnace may include 10 curing chambers.

In such example, the first to tenth curing chambers may be sequentially arranged in this order in a direction in which the steel sheet is transferred to the curing furnace.

For instance, the first curing chamber has a heating temperature of 0 to 150 °C, the second curing chamber has a heating temperature of 150 to 250 °C, and the third curing chamber has a heating temperature of 300 to 500 °C. Then, the remaining curing chambers arranged after the third curing chamber, that is, the fourth to tenth curing chambers may have the same heating temperature of 300 to 500 °C.

According to the present disclosure, the heat curing may be performed to cure the coated layer of the steel sheet. When the thermal curing of the coated layer occurs at a rapidly elevated temperature, the coated surface may boil.

Therefore, each temperature controller may be mounted in each curing chamber to inhibit the rapid rise in temperature. Thus, the temperature of the steel sheet passing through the curing chambers may rise up in a step by step manner, thereby stably curing the coated surface.

While the step by step temperature increase as described above is achieved, the curing temperature may increase to a high temperature in a range of 300 to 500 °C. Thus, the final coated layer may have a hardness equal to or similar to that of glass and may be transparent.

The conveying velocity of the steel sheet passing through the curing furnace may be, for example, in a range of 0.1 to 1m/min. The curing time may be greater than or equal to 20 minutes.

When the curing time is equal to or greater than 20 minutes, the liquid may satisfy the required properties. When the curing time is smaller than 20 minutes, curing may not be performed properly, and thus it may be difficult to satisfy the required hardness value (9H, surface pencil hardness, 1 kg load).

As described above, in the steel sheet coating apparatus and the steel sheet coating method, the surface of the steel sheet is cleaned with the cleaning liquid and then the polishing liquid is applied to the cleaned surface. Then, the steel sheet surface may be modified by performing mechanical polishing to polish the surface using the polishing wheel. This may allow the steel sheet having enhanced adhesion with the coated layer composed of a single layer.

Further, in the steel sheet coating apparatus and the steel sheet coating method, the coating liquid may be continuously applied on the sheet surface using the plurality of coating rollers. This may allow the steel sheet having a thin coated layer composed of a single layer whose thickness may be easily controlled to a desired coating thickness.

In addition, in the steel sheet coating apparatus and the steel sheet coating method, the steel sheet having the high heat-resistant coated layer formed thereon may pass through the curing furnace including the plurality of curing chambers whose temperatures may be raised up in a step by step manner to a high temperature, thereby to cure the high heat-resistant coated layer in a step by step manner. Thus, the coated surface may be stabilized at the high temperature.

## Claims

1. A steel sheet coating apparatus comprising:
a cleaner configured to apply cleaning liquid to thereby clean a surface of a steel sheet (210);
a polisher configured to apply polishing liquid to the cleaned surface of the steel sheet (210), the polisher comprising at least one polishing wheel (300) configured to polish the surface of the steel sheet (210);
a coater comprising a plurality of coating rollers (410) that are configured to coat the polished surface of the steel sheet (210) with coating liquid; and
a curing furnace comprising a plurality of curing chambers that are configured to heat the steel sheet (210) coated with the coating liquid, the plurality of curing chambers having different heating temperatures and being configured to cure the coating liquid on the steel sheet (210) based on heating the steel sheet in one chamber having a first temperature and then heating the steel sheet in another chamber having a second temperature greater than the first temperature,
wherein the plurality of curing chambers comprises:
a first curing chamber configured to receive the steel sheet (210) and operate at a first heating temperature in a range of 0 to 150 °C;
a second curing chamber, downstream of the first curing chamber, configured to receive the steel sheet (210) transferred from the first curing chamber and operate at a second heating temperature in a range of 150 to 250 °C; and
a third curing chamber, downstream of the third curing chamber, configured to receive the steel sheet (210) transferred from the second curing chamber and operate at a third heating temperature in a range of 300 to 500 °C,
wherein the plurality of coating rollers comprise a first coating roller (410) and a first control roller (420) that are disposed at a first side of the steel sheet (210) and that contact each other, the first control roller (420) being configured to adjust an amount of the coating liquid applied to the steel sheet (210) based on changing a rotating direction or a rotating speed, and
wherein a first spacing from the steel sheet (210) to the first coating roller (410) is less than a second spacing from the steel sheet (210) to the first control roller (420),
wherein the coater is configured to receive the coating liquid (231) at a position between the first coating roller (410) and the first control roller (420) in a state in which the first coating roller (410) and the first control roller (420) rotate,
wherein a diameter of the first coating roller (410) is greater than a diameter of the first control roller (420), and
wherein an outer circumferential surface of the first coating roller (410) is configured to contact a layer of the coating liquid (231) attached to the steel sheet (210), and the first control roller (420) is spaced apart from the layer of the coating liquid (231).

2. The steel sheet coating apparatus of claim 1, wherein the polishing liquid comprises water, 1 to 10% by weight of nitric acid, 0.1 to 5% by weight of alumina having a mesh size between 1000 and 3000 mesh, and the remainder being water.

3. The steel sheet coating apparatus of claim 1, or 2, wherein the at least one polishing wheel (300) comprises a sponge or a polishing whetstone.

4. The steel sheet coating apparatus of claim 1, 2, or 3, wherein each of the plurality of coating rollers (410) is spaced apart from the steel sheet by a spacing in a range of 0.1 to 1.0 mm between the steel sheet (210) and the surface of the coating roller (410).

5. A steel sheet coating method comprising:
cleaning (S120) a surface of a steel sheet using cleaning liquid;
applying (S130) polishing liquid to the cleaned surface of the steel sheet, and polishing the surface of the steel sheet using at least one polishing wheel;
coating (S 140) the polished surface of the steel sheet with coating liquid using a plurality of coating rollers; and
transferring (S 150) the coated steel sheet through a plurality of curing chambers that are arranged to increase a heating temperature from one chamber to another chamber to thereby cure the coating liquid on the steel sheet,
wherein transferring the coated steel sheet is performed through at least three curing chambers comprising:
a first curing chamber having a first heating temperature in a range of 0 to 150 °C;
a second curing chamber, downstream of the first curing chamber, having a second heating temperature in a range of 150 to 250 °C; and
a third curing chamber, downstream of the second curing chamber, having a third heating temperature in a range of 300 to 500 °C,
wherein coating the polished surface of the steel sheet comprises:
placing the steel sheet to a first position that faces a first coating roller and a first control roller among the plurality of coating rollers;
supplying the coating liquid between the first coating roller and the first control roller based on rotating the first coating roller and the first control roller to thereby attach a first coating layer of the coating liquid; and
adjusting an amount of the coating liquid based on changing a rotating direction or a rotating speed of the first control roller, and
wherein a first spacing from the steel sheet to the first coating roller is less than a second spacing from the steel sheet to the first control roller,
wherein coating the polished surface of the steel sheet further comprises:
transferring the steel sheet from the first position to a second position that faces a second coating roller and a second control roller among the plurality of coating rollers;
supplying the coating liquid between the second coating roller and the second control roller based on rotating the second coating roller and the second control roller to thereby attach a second coating layer of the coating liquid on the first coating layer; and
adjusting an amount of the coating liquid based on changing a rotating direction or a rotating speed of the second control roller.

6. The steel sheet coating method of claim 5, wherein the polishing liquid comprises 1 to 10% by weight of nitric acid, 0.1 to 5% by weight of alumina having a mesh size between 1000 and 3000 mesh, and the remainder being water.

7. The steel sheet coating method of claim 5 or 6, wherein the coating liquid comprises silicate.

8. The steel sheet coating method of any one of claims 5 to 7, wherein coating the polished surface of the steel sheet comprises moving the steel sheet at a conveying velocity in a range of 0.1 to 1m/min.

## Patentansprüche

1. Vorrichtung zum Beschichten von Stahlblech, die aufweist:
einen Reiniger, der konfiguriert ist, eine Reinigungsflüssigkeit aufzubringen, um dadurch eine Oberfläche eines Stahlblechs (210) zu reinigen;
eine Poliermaschine, die konfiguriert ist, eine Polierflüssigkeit auf die gereinigte Oberfläche des Stahlblechs (210) aufzubringen, wobei die Poliermaschine mindestens eine Polierscheibe (300) aufweist, die konfiguriert ist, die Oberfläche des Stahlblechs (210) zu polieren;
einen Beschichter, der mehrere Beschichtungswalzen (410) aufweist, die konfiguriert sind, die polierte Oberfläche des Stahlblechs (210) mit eine Beschichtungsflüssigkeit zu beschichten; und
einen Aushärteofen, der mehrere Aushärtekammern aufweist, die konfiguriert sind, das mit der Beschichtungsflüssigkeit beschichtete Stahlblech (210) zu erwärmen, wobei die mehreren Aushärtekammern unterschiedliche Heiztemperaturen aufweisen und
konfiguriert sind, die Beschichtungsflüssigkeit auf dem Stahlblech (210) basierend auf dem Erwärmen des Stahlblechs in einer Kammer mit einer ersten Temperatur und dem anschließenden Erwärmen des Stahlblechs in einer anderen Kammer mit einer zweiten Temperatur, die höher ist als die erste Temperatur, auszuhärten, wobei die mehreren Aushärtekammern aufweisen:
eine erste Aushärtekammer, die konfiguriert ist, das Stahlblech (210) aufzunehmen und bei einer ersten Heiztemperatur in einem Bereich von 0 bis 150 °C zu arbeiten;
eine zweite Aushärtekammer stromabwärts der ersten Aushärtekammer, die konfiguriert ist, das von der ersten Aushärtekammer transferierte Stahlblech (210) aufzunehmen und bei einer zweiten Heiztemperatur in einem Bereich von 150 bis 250 °C zu arbeiten; und eine dritte Aushärtekammer stromabwärts der zweiten Aushärtekammer, die konfiguriert ist, das von der zweiten Aushärtekammer transferierte Stahlblech (210) aufzunehmen und bei einer dritten Heiztemperatur in einem Bereich von 300 bis 500 °C zu arbeiten,
wobei die mehreren Beschichtungswalzen eine erste Beschichtungswalze (410) und eine erste Steuerwalze (420) aufweisen, die an einer ersten Seite des Stahlblechs (210) angeordnet sind und die einander berühren, wobei die erste Steuerwalze (420) konfiguriert ist, eine Menge der Beschichtungsflüssigkeit, die auf das Stahlblech (210) aufgebracht wird, basierend auf dem Ändern einer Drehrichtung oder einer Drehgeschwindigkeit einzustellen, und
wobei ein erster Abstand vom Stahlblech (210) zur ersten Beschichtungswalze (410) kleiner ist als ein zweiter Abstand vom Stahlblech (210) zur ersten Steuerwalze (420), wobei der Beschichter konfiguriert ist, die Beschichtungsflüssigkeit (231) an einer Position zwischen der ersten Beschichtungswalze (410) und der ersten Steuerwalze (420) in einem Zustand aufzunehmen, in dem die erste Beschichtungswalze (410) und die erste Steuerwalze (420) rotieren,
wobei ein Durchmesser der ersten Beschichtungswalze (410) größer ist als ein Durchmesser der ersten Steuerwalze (420), und
wobei eine Außenumfangsfläche der ersten Beschichtungswalze (410) konfiguriert ist, eine Schicht der Beschichtungsflüssigkeit (231) zu berühren, die am Stahlblech (210) anhaftet, und die erste Steuerwalze (420) von der Schicht der Beschichtungsflüssigkeit (231) beabstandet ist.

2. Vorrichtung zum Beschichten von Stahlblech nach Anspruch 1, wobei die Polierflüssigkeit Wasser, 1 bis 10 Gew.-% Salpetersäure, 0,1 bis 5 Gew.-% Aluminiumoxid mit einer Maschenweite zwischen 1000 und 3000 Mesh und als Rest Wasser aufweist.

3. Vorrichtung zum Beschichten von Stahlblech nach Anspruch 1 oder 2, wobei die mindestens eine Polierscheibe (300) einen Schwamm oder einen Polierschleifstein aufweist.

4. Vorrichtung zum Beschichten von Stahlblech nach Anspruch 1, 2 oder 3, wobei jede der mehreren Beschichtungswalzen (410) vom Stahlblech durch einen Abstand in einem Bereich von 0,1 bis 1,0 mm zwischen dem Stahlblech (210) und der Oberfläche der Beschichtungswalze (410) beabstandet ist.

5. Verfahren zum Beschichten von Stahlblech, das aufweist:
Reinigen (S120) einer Oberfläche eines Stahlblechs unter Verwendung einer Reinigungsflüssigkeit;
Aufbringen (S130) einer Polierflüssigkeit auf die gereinigte Oberfläche des Stahlblechs und Polieren der Oberfläche des Stahlblechs unter Verwendung mindestens einer Polierscheibe;
Beschichten (S140) der polierten Oberfläche des Stahlblechs mit Beschichtungsflüssigkeit unter Verwendung von mehreren Beschichtungswalzen; und Transferieren (S150) des beschichteten Stahlblechs durch mehrere Aushärtekammern, die so angeordnet sind, dass sie eine Heiztemperatur von einer Kammer zu einer anderen Kammer erhöhen, um dadurch die Beschichtungsflüssigkeit auf dem Stahlblech auszuhärten,
wobei das Transferieren des beschichteten Stahlblechs durch mindestens drei Aushärtekammern erfolgt, die aufweisen:
eine erste Aushärtekammer mit einer ersten Heiztemperatur in einem Bereich von 0 bis 150 °C;
eine zweite Aushärtekammer stromabwärts der ersten Aushärtekammer mit einer zweiten Heiztemperatur im Bereich von 150 bis 250 °C; und
eine dritte Aushärtekammer stromabwärts der zweiten Aushärtekammer mit einer dritten Heiztemperatur im Bereich von 300 bis 500 °C,
wobei das Beschichten der polierten Oberfläche des Stahlblechs aufweist:
Anordnen des Stahlblechs in einer ersten Position, die einer ersten Beschichtungswalze und einer ersten Steuerwalze unter den mehreren Beschichtungswalzen gegenüberliegt; Zuführen der Beschichtungsflüssigkeit zwischen der ersten Beschichtungswalze und der ersten Steuerwalze, basierend auf dem Drehen der ersten Beschichtungswalze und der ersten Steuerwalze, um dadurch eine erste Beschichtungsschicht der Beschichtungsflüssigkeit anzuheften; und
Einstellen einer Menge der Beschichtungsflüssigkeit basierend auf einer Änderung einer Drehrichtung oder einer Drehgeschwindigkeit der ersten Steuerwalze, und
wobei ein erster Abstand zwischen dem Stahlblech und der ersten Beschichtungswalze geringer ist als ein zweiter Abstand zwischen dem Stahlblech und der ersten Steuerwalze, wobei das Beschichten der polierten Oberfläche des Stahlblechs ferner aufweist:
Transferieren des Stahlblechs aus der ersten Position in eine zweite Position, die einer zweiten Beschichtungswalze und einer zweiten Steuerwalze unter den mehreren Beschichtungswalzen gegenüberliegt;
Zuführen der Beschichtungsflüssigkeit zwischen der zweiten Beschichtungswalze und der zweiten Steuerwalze basierend auf dem Drehen der zweiten Beschichtungswalze und der zweiten Steuerwalze, um dadurch eine zweite Beschichtungsschicht der Beschichtungsflüssigkeit auf der ersten Beschichtungsschicht anzuheften; und
Einstellen einer Menge der Beschichtungsflüssigkeit basierend auf der Änderung einer Drehrichtung oder einer Drehgeschwindigkeit der zweiten Steuerwalze.

6. Stahlblechbeschichtungsverfahren nach Anspruch 5, wobei die Polierflüssigkeit 1 bis 10 Gew.-% Salpetersäure, 0,1 bis 5 Gew.-% Aluminiumoxid mit einer Maschengröße zwischen 1000 und 3000 Mesh und als Rest Wasser aufweist.

7. Stahlblechbeschichtungsverfahren nach Anspruch 5 oder 6, wobei die Beschichtungsflüssigkeit Silikat aufweist.

8. Verfahren zum Beschichten von Stahlblech nach einem der Ansprüche 5 bis 7, wobei das Beschichten der polierten Oberfläche des Stahlblechs das Bewegen des Stahlblechs mit einer Fördergeschwindigkeit im Bereich von 0,1 bis 1 m/min aufweist.

## Revendications

1. Appareil de revêtement de tôle d'acier, comprenant :
un dispositif de nettoyage prévu pour appliquer un liquide de nettoyage afin de nettoyer la surface d'une tôle d'acier (210) ;
une polisseuse prévue pour appliquer un liquide de polissage sur la surface nettoyée de la tôle d'acier (210), ladite polisseuse comprenant au moins une roue de polissage (300) prévue pour polir la surface de la tôle d'acier (210) ;
un dispositif de revêtement comprenant une pluralité de rouleaux de revêtement (410) prévus pour revêtir la surface polie de la tôle d'acier (210) d'un liquide de revêtement ; et
un four de durcissement comprenant une pluralité de chambres de durcissement prévues pour chauffer la tôle d'acier (210) revêtue du liquide de revêtement, ladite pluralité de chambres de durcissement présentant des températures de chauffage différenciées et étant prévue pour durcir le liquide de revêtement sur la tôle d'acier (210) par chauffage de la tôle d'acier dans une chambre ayant une première température, puis par chauffage de la tôle d'acier dans une autre chambre ayant une deuxième température supérieure à la première température,
ladite pluralité de chambres de durcissement comprenant :
une première chambre de durcissement prévue pour recevoir la tôle d'acier (210) et fonctionner à une première température de chauffage comprise entre 0 et 150 °C ;
une deuxième chambre de durcissement, en aval de la première chambre de durcissement, prévue pour recevoir la tôle d'acier (210) transférée depuis la première chambre de durcissement et fonctionner à une deuxième température de chauffage comprise entre 150 et 250 °C ; et
une troisième chambre de durcissement, en aval de la troisième chambre de durcissement, prévue pour recevoir la feuille d'acier (210) transférée depuis la deuxième chambre de durcissement et fonctionner à une troisième température de chauffage comprise entre 300 et 500 °C,
où la pluralité de rouleaux de revêtement comprend un premier rouleau de revêtement (410) et un premier rouleau de commande (420) disposés sur un premier côté de la tôle d'acier (210) et en contact l'un avec l'autre, le premier rouleau de commande (420) étant prévu pour ajuster une quantité de liquide de revêtement appliquée à la tôle d'acier (210) par changement du sens de rotation ou de la vitesse de rotation, et
où un premier espacement entre la tôle d'acier (210) et le premier rouleau de revêtement (410) est inférieur à un deuxième espacement entre la tôle d'acier (210) et le premier rouleau de commande (420),
où le dispositif de revêtement est prévu pour recevoir le liquide de revêtement (231) à un emplacement entre le premier rouleau de revêtement (410) et le premier rouleau de commande (420) en état de rotation du premier rouleau de revêtement (410) et du premier rouleau de commande (420),
où le diamètre du premier rouleau de revêtement (410) est supérieur au diamètre du premier rouleau de commande (420), et
où la surface circonférentielle extérieure du premier rouleau de revêtement (410) est prévue pour venir en contact avec une couche du liquide de revêtement (231) adhérant à la tôle d'acier (210), et le premier rouleau de commande (420) est espacé de la couche du liquide de revêtement (231).

2. Appareil de revêtement de tôle d'acier selon la revendication 1, où le liquide de polissage comprend de l'eau, 1 à 10 % en poids d'acide nitrique, 0,1 à 5 % en poids d'alumine ayant une taille de maille comprise entre 1000 et 3000 mesh, le reste étant de l'eau.

3. Appareil de revêtement de tôle d'acier selon la revendication 1 ou la revendication 2, où ladite au moins une roue de polissage (300) comprend une éponge ou une meule de polissage.

4. Appareil de revêtement de tôle d'acier selon la revendication 1, la revendication 2 ou la revendication 3, où chaque rouleau de la pluralité de rouleaux de revêtement (410) est espacé de la tôle d'acier d'un intervalle compris entre 0,1 et 1,0 mm entre la tôle d'acier (210) et la surface du rouleau de revêtement (410).

5. Procédé de revêtement de tôle d'acier, comprenant :
le nettoyage (S120) de la surface d'une tôle d'acier au moyen d'un liquide de nettoyage ; l'application (S130) d'un liquide de polissage sur la surface nettoyée de la tôle d'acier, et le polissage de la surface de la tôle d'acier au moyen d'au moins une roue de polissage ; le revêtement (S140) de la surface polie de la tôle d'acier avec un liquide de revêtement au moyen d'une pluralité de rouleaux de revêtement ; et
le transfert (S150) de la tôle d'acier revêtue par une pluralité de chambres de durcissement disposées de manière à augmenter la température de chauffage d'une chambre à l'autre afin de durcir le liquide de revêtement sur la tôle d'acier,
où le transfert de la tôle d'acier revêtue est effectué par au moins trois chambres de durcissement comprenant :
une première chambre de durcissement ayant une première température de chauffage comprise entre 0 et 150 °C ;
une deuxième chambre de durcissement, en aval de la première chambre de durcissement, ayant une deuxième température de chauffage comprise entre 150 et 250 °C ; et
une troisième chambre de durcissement, en aval de la deuxième chambre de durcissement, ayant une troisième température de chauffage comprise entre 300 et 500 °C,
où le revêtement de la surface polie de la tôle d'acier comprend :
le positionnement de la tôle d'acier à un premier emplacement faisant face à un premier rouleau de revêtement et à un premier rouleau de commande parmi la pluralité de rouleaux de revêtement ;
le refoulement du liquide de revêtement entre le premier rouleau de revêtement et le premier rouleau de commande par rotation du premier rouleau de revêtement et du premier rouleau de commande afin de fixer une première couche de liquide de revêtement ; et
l'ajustement d'une quantité de liquide de revêtement par changement du sens de rotation ou de la vitesse de rotation du premier rouleau de commande, et
où un premier espacement entre la tôle d'acier et le premier rouleau de revêtement est inférieur à un deuxième espacement entre la tôle d'acier et le premier rouleau de commande,
où le revêtement de la surface polie de la tôle d'acier comprend en outre :
le transfert de la tôle d'acier du premier emplacement à un deuxième emplacement faisant face à un deuxième rouleau de revêtement et à un deuxième rouleau de commande parmi la pluralité de rouleaux de revêtement ;
le refoulement du liquide de revêtement entre le deuxième rouleau de revêtement et le deuxième rouleau de commande par rotation du deuxième rouleau de revêtement et du deuxième rouleau de commande afin de fixer une deuxième couche de liquide de revêtement sur la première couche de revêtement ; et
l'ajustement d'une quantité de liquide de revêtement par changement du sens de rotation ou de la vitesse de rotation du deuxième rouleau de commande.

6. Procédé de revêtement de tôle d'acier selon la revendication 5, où le liquide de polissage comprend 1 à 10 % en poids d'acide nitrique, 0,1 à 5 % en poids d'alumine ayant une taille de maille comprise entre 1000 et 3000 mesh, le reste étant de l'eau.

7. Procédé de revêtement de tôle d'acier selon la revendication 5 ou la revendication 6, où le liquide de revêtement comprend du silicate.

8. Procédé de revêtement de tôle d'acier selon l'une des revendications 5 à 7, où le revêtement de la surface polie de la tôle d'acier comprend le déplacement de la tôle d'acier à une vitesse de transport comprise entre 0,1 et 1 m/min.
